# EUROPÄISCHE PATENTSCHRIFT

(11) **EP 2 378 172 B1**
(45) Veröffentlichungstag und Bekanntmachung des Hinweises auf die Patenterteilung: **03.07.2013**
(21) Anmeldenummer: 11156617.0
(22) Anmeldetag: 02.03.2011
(51) Int. Cl.: F16L 3/20, F16L 3/202, H02G 3/32

(54) **Verstellbare Befestigungskonsole für Leitungsführungskanäle**
Adjustable fixing console for cable guidance channels
Console de fixation réglable pour canaux de guidage de conduite

(30) Priorität: 24.03.2010 DE 102010013434
(43) Veröffentlichungstag der Anmeldung: 19.10.2011
(73) Patentinhaber: OBO Bettermann GmbH & Co. KG, 58710 Menden (DE)
(72) Erfinder: Warkus, Kai, 51709 Marienheide (DE)
(74) Vertreter: Patentanwälte Ruff, Wilhelm, Beier, Dauster & Partner

(56) Entgegenhaltungen:
- WO-A1-2009/145114
- DE-U1- 20 110 986
- DE-U1-202007 015 607
- JP-A- 2000 002 367
- US-A1- 2010 067 185

## Beschreibung

Die Erfindung betrifft eine verstellbare Befestigungskonsole für Leitungsführungskanäle.

Befestigungskonsolen für Leitungsführungskanäle sind dafür vorgesehen, Leitungsführungskanäle an einer Gebäudewand zu montieren. Um Abweichungen der Gebäudewand von der Senkrechten oder auch von einer Gerade auszugleichen, müssen die Befestigungskonsolen in der Regel unterlegt werden. Bekannt sind auch zweiteilige Befestigungskonsolen, bei denen ein Wandbefestigungsteil und ein Kanalbefestigungsteil geringfügig gegeneinander verschwenkt werden können.

Aus der japanischen Patentzusammenfassung JP 2000-002367 ist eine Vorrichtung bekannt, um Leitungen erdbebensicher von einer Decke abhängen zu können. Diese Vorrichtung weist wenigstens einen horizontal angeordneten Träger für die Leitungen auf, der mittels zweier V-förmig schräg nach oben verlaufender Spannseile von einem Deckenträger abgehängt ist. In vertikaler Richtung sind zwei Stützstangen vorgesehen, die sich einerseits an dem horizontalen Träger und andererseits an dem ebenfalls horizontalen Deckenträger abstützen. Die vertikalen Stützstangen sind in der Länge verstellbar und weisen ein an dem Deckenträger angeordnetes, im Querschnitt U-förmiges Anschlussstück auf, in das eine im Querschnitt etwa U-förmige Profilstange eingeschoben ist. Das Anschlussstück und die Profilstange können in vertikaler Richtung zueinander verstellt werden, um eine Länge der Stützstange zu ändern. Das Anschlussstück und die Profilstange sind so ineinander eingesetzt, dass sich die Schenkel der Profilstange in Richtung auf die Basis des Anschlussstücks erstrecken und die Profilstange und das Anschlussstück wenigstens abschnittsweise ein Hohlprofil bilden. Die Profilstange weist am Ende ihrer Schenkel jeweils eine Abbiegung um etwas mehr als 90° auf, die nach innen vorsteht. An diesen beiden Abbiegungen greift eine Klemmscheibe an, die mit einem Spannbolzen versehen ist, der sich durch eine Bohrung in der Basis des Anschlussstücks hindurch erstreckt. Wird die Klemmscheibe über den Spannbolzen angezogen, so werden die Enden der Schenkel des Trägers in Richtung auf die Basis des Anschlussstückes vorgespannt und dadurch wird die Profilstange relativ zum Anschlussstück festgeklemmt.

Aus der Zusammenfassung der internationalen Offenlegungsschrift WO 2009/145114 A1 ist eine Bildschirmbefestigung bekannt, bei der zwei im Querschnitt etwa U-förmige Bauteile ineinander eingeschoben und aneinander arretiert werden können. Eine Arretierung der beiden U-förmigen Bauteile erfolgt dadurch, dass durch jeden Schenkel des äußeren Bauteils eine Klemmschraube gedreht wird, die dann den jeweiligen Schenkel des inneren Bauteils festklemmt.

Aus der US-Offenlegungsschrift US 2010/0067185 A1 ist eine weitere Bildschirmbefestigung bekannt, bei der die Befestigung auf die Größe eines festzuhaltenden Bildschirms eingestellt werden kann. U-förmige Halteschienen können hierzu relativ zu einer Basis, die eine U-förmige Nut aufweist, verschoben werden.

Die De 20 2007 015 607 U1 zeigt eine Befestigungskonsole gemäβ dem Oberbegriff von Anspruch 1.

Mit der Erfindung soll eine verbesserte verstellbare Befestigungskonsole für Leitungsführungskanäle bereitgestellt werden.

Erfindungsgemäß ist hierzu eine verstellbare Befestigungskonsole für Leitungsführungskanäle mit einem Wandbefestigungsteil und einem Kanalbefestigungsteil vorgesehen, bei der wenigstens ein erstes und ein zweites Teleskopelement vorgesehen sind, wobei die Teleskopelemente verschiebbar zueinander angeordnet sind, und bei der die Teleskopelemente im Querschnitt jeweils U-förmig sind, mit einer Basis und zwei von der Basis ausgehenden Schenkeln, sowie relativ zueinander verschiebbar angeordnet sind, wobei sich die Schenkel des zweiten Teleskopelements in Richtung auf die Basis des ersten Teleskopelements erstrecken und die beiden Teleskopelemente wenigstens abschnittsweise ein Hohlprofil bilden und wobei wenigstens eine Befestigungsschraube vorgesehen ist, um die Basis des zweiten Teleskopelements in Richtung auf die Basis des ersten Teleskopelements vorzuspannen.

Indem die beiden U-förmigen Teleskopelemente gegeneinander gedreht werden, so dass also zwischen den Basen der beiden Teleskopelemente ein Abstand besteht und somit wenigstens abschnittsweise ein Hohlprofil gebildet ist, können die beiden Teleskopelemente so gegeneinander verspannt werden, dass sie auch bei einer vergleichsweise geringen Vorspannkraft zuverlässig aneinander halten. Bei einer Vorspannung der Basen der beiden Teleskopelemente aufeinander zu, werden sich die Teleskopelemente wenigstens abschnittsweise so verformen, dass sich die Schenkel der Teleskopelemente gegeneinander legen und verspannen und die Endkanten der Schenkel werden gegen die Basis des gegenüberliegenden Teleskopelements gedrückt. Aufgrund der relativ kleinen Anlagefläche dieser Endkante auf der Basis kann dort eine hohe Vorspannkraft und damit eine sehr große Haftreibung erzielt werden. Es ist dadurch nicht zu befürchten, dass Stöße oder Schläge gegen den letztendlich montierten Leitungsführungskanal zu einer Verschiebung der Teleskopelemente zueinander führen. Indem durch die erfindungsgemäße Anordnung der Teleskopelemente die Basen der beiden Teleskopelemente im Abstand voneinander angeordnet sind, ist eine Kontaktfläche zwischen den beiden Teleskopelementen vergleichsweise gering. Die Teleskopelemente sind vorteilhafterweise so präzise gefertigt, dass diese im Wesentlichen spielfrei ineinander gleiten. Die Montage der erfindungsgemäßen Befestigungskonsole ist dadurch mit hoher Präzision möglich.

Zweckmäßigerweise ist die Befestigungsschraube jeweils zentral in der Mitte der beiden Basen angeordnet und eines der beiden Teleskopelemente kann in seiner Basis ein Langloch zur Anordnung der Befestigungsschraube aufweisen.

In Weiterbildung der Erfindung entspricht ein Abstand zwischen den einander zugewandten Innenflächen der Schenkel des ersten Teleskopelements im Wesentlichen dem Abstand zwischen den voneinander abgewandten Außenflächen der Schenkel des zweiten Teleskopelements.

Auf diese Weise können die Schenkel des zweiten Teleskopelements zwischen den Schenkeln des ersten Teleskopelements geführt werden. Beim Vorspannen der beiden Basen der Teleskopelemente aufeinander zu wird sich die Basis des zweiten Teleskopelements geringfügig krümmen, wodurch die Schenkel des zweiten Teleskopelements nach außen auf die Innenflächen der Schenkel des ersten Teleskopelements zu bewegt werden. Dadurch kann eine sichere Verspannung der beiden Teleskopelemente gegeneinander erreicht werden.

In Weiterbildung der Erfindung liegen die Stirnflächen an den freien Enden der Schenkel des zweiten Teleskopelements auf der Basis des ersten Teleskopelements auf.

Auf diese Weise lässt sich ein besonders sicherer Halt der beiden Teleskopelemente aneinander erreichen.

In Weiterbildung der Erfindung weist das zweite Teleskopelement wenigstens im Bereich der Basis eine geringere Wandstärke auf als das Teleskopelement.

Auf diese Weise kann sichergestellt werden, dass sich beim Vorspannen der beiden Basen aufeinander zu hauptsächlich das Teleskopelement mit der geringeren Wandstärke verformt. Zweckmäßigerweise ist das zwischen die beiden Schenkel des ersten Teleskopelements eingelegte zweite Teleskopelement mit geringerer Wandstärke ausgeführt, so dass sich die Schenkel des zweiten Teleskopelements beim Vorspannen nach außen spreizen und gegen die Innenseiten der Schenkel des ersten Teleskopelements drücken und die beiden Teleskopelemente dadurch miteinander verspannen.

In Weiterbildung der Erfindung ist eine verstellbare Befestigungskonsole für Leitungsführungskanäle mit einem Wandbefestigtingsteil und einem Kanalbefestigungsteil vorgesehen, wobei wenigstens ein erstes und ein zweites Teleskopelement vorgesehen sind, die verschiebbar zueinander angeordnet sind, wobei das Wandbefestigungsteil und das Kanalbefestigungsteil mittels der beiden Teleskopelemente miteinander verbunden sind, wobei das Wandbefestigungsteil, die Teleskopelemente und/oder das Kanalbefestigungsteil ein verschwenkbares Winkelstück aufweisen und wobei das Winkelstück einstückig mit dem Wandbefestigungsteil, den Teleskopelementen bzw. dem Kanalbefestigungsteil ausgebildet und mittels einer Sollbiegestelle schwenkbar angebunden ist.

Indem das Winkelstück einstückig beispielsweise mit dem Wandbefestigungsteil ausgebildet ist, wird die Herstellung der erfindungsgemäßen Befestigungskonsole und vor allem deren Montage erheblich erleichtert. Verschwenkbares Winkelstück und Wandbefestigungsteil sind über eine Sollbiegestelle unlösbar miteinander verbunden und dennoch im Winkel zueinander einstellbar. Es ist dadurch ausgeschlossen, dass Winkelstück und Wandbefestigungsteil sich voneinander lösen und beispielsweise auf einer Baustelle eines der beiden Teile verloren geht. Die Sollbiegestelle ist dabei zweckmäßigerweise so ausgebildet, dass ein Winkel zwischen Winkelstück und Wandbefestigungsteil bzw. Teteskopelementen oder Kanalbefestigungsteil ohne Werkzeug von Hand einstellbar ist.

Das verschwenkbare Winkelstück kann auch an einem der Teleskopelemente vorgesehen sein und ist dann einstückig mit dem Teleskopelement ausgebildet. Es ist auch möglich, das Winkelstück am Kanalbefestigungsteil vorzusehen und das Winkelstück dann einstückig mit dem Kanalbefestigungsteil auszubilden. Zweckmäßig ist auch das Vorsehen jeweils eines verschwenkbaren Winkelstücks am Wandbefestigungsteil und am Kanalbefestigungsteil, wenn starke Wandschrägen ausgeglichen werden sollen oder schwierige räumliche Verhältnisse vorliegen.

In Weiterbildung der Erfindung weist das verschwenkbare Winkelstück wenigstens einen ersten und einen zweiten Abschnitt auf, die senkrecht zueinander angeordnet sind, wobei der an die Sollbiegestelle angrenzende erste Abschnitt parallel zu einer mittels der Sollbiegestelle definierten Schwenkachse und der zweite Abschnitt senkrecht zur Schwenkachse angeordnet ist. Auf diese Weise wird eine sehr stabile Ausbildung des Winkelstücks erreicht und es kann sichergestellt werden, dass sich beim Verschwenken des Winkelstücks ausschließlich die Sollbiegestelle verformt.

In Weiterbildung der Erfindung weisen das Wandbefestigungsteil die Teleskopelemente und/oder das Kanalbefestigungsteil wenigstens einen dritten und einen vierten Abschnitt auf, die senkrecht zueinander angeordnet sind, wobei der an die Sollbiegestelle angrenzende dritte Abschnitt parallel zu einer mittels der Sollbiegestelle definierten Schwenkachse und der vierte Abschnitt senkrecht zur Schwenkachse angeordnet ist.

Durch eine solche Ausbildung kann beispielsweise das Wandbefestigungsteil äußerst stabil ausgebildet werden, so dass auch auf Seiten des Wandbefestigungsteils beim Verschwenken des Winkelstücks eine Verformung nur im Bereich der Sollbiegestelle auftritt.

In Weiterbildung der Erfindung sind der zweite Abschnitt des Winkelstücks und der vierte Abschnitt des Wandbefestigungsteils parallel zueinander angeordnet. Vorteilhafterweise liegen der zweite Abschnitt des Winkelstücks und der vierte Abschnitt wenigstens abschnittsweise aneinander an.

Auf diese Weise kann das Winkelstück am Wandbefestigungsteil geführt werden und insbesondere das Winkelstück und das Wandbefestigungsteil können nach Erreichen des gewünschten Schwenkwinkels durch Vorspannen der beiden parallelen Abschnitte zueinander gegeneinander verspannt und arretiert werden. Dies kann beispielsweise durch einen Schraubbolzen erfolgten, der sich durch die beiden parallelen Abschnitte hindurch erstreckt, wobei in einem der beiden Abschnitte eine Gewindebohrung und in dem anderen Abschnitt ein gekrümmtes Langloch vorgesehen ist.

In Weiterbildung der Erfindung sind das Wandbefestigungsteil, die Teleskopelemente und/oder das Kanalbefestigungsteil als Blechbiegeteil ausgebildet.

Blechbiegeteile können auch in komplizierten Formen hergestellt werden und weisen eine hohe Stabilität auf. Speziell die Ausbildung der Sollbiegestelle lässt sich mittels Blechbiegeteilen sehr gut verwirklichen. Weitere Merkmale und Vorteile der Erfindung ergeben sich aus den Ansprüchen und der nachfolgenden Beschreibung bevorzugter Ausführungsformen der Erfindung. Einzelmerkmale der unterschiedlichen beschriebenen Ausführungsformen lassen sich dabei in beliebiger Weise miteinander kombinieren, ohne den Rahmen der Erfindung zu überschreiten. In den Zeichnungen zeigen:
Fig. 1 eine perspektivische Ansicht einer erfindungsgemäßen Befestigungskonsole gemäß einer ersten Ausführungsform der Erfindung von schräg vorne,
Fig. 2 eine Vorderansicht der Befestigungskonsole der Fig. 1,
Fig. 3 eine Seitenansicht der Befestigungskonsole der Fig. 1,
Fig. 4 eine Draufsicht auf die Befestigungskonsole der Fig. 1,
Fig. 5 eine perspektivische Ansicht der Befestigungskonsole der Fig. 1 im zusammengeschobenen Zustand,
Fig. 6 eine Vorderansicht der Befestigungskonsole der Fig. 5,
Fig. 7 eine Seitenansicht der Befestigungskonsole der Fig. 5,
Fig. 8 eine Draufsicht auf die Befestigungskonsole der Fig. 5,
Fig. 9 eine Ansicht auf den Schnittverlauf A-A aus Fig. 7,
Fig. 10 eine Befestigungskonsole gemäß einer zweiten Ausführungsform der Erfindung,
Fig. 11 die Befestigungskonsole der Fig. 10 im ausgezogenen Zustand,
Fig. 12 eine Draufsicht auf die Schnittebene A-A aus Fig. 10,
Fig. 13 eine vergrößerte Darstellung der Einzelheit B aus Fig. 12,
Fig. 14 eine Draufsicht auf die Schnittebene C-C in Fig. 11,
Fig. 15 eine vergrößerte Darstellung der Einzelheit D in der Fig. 14,
Fig. 16 eine Seitenansicht einer erfindungsgemäßen Befestigungskonsole gemäß einer dritten Ausführungsform,
Fig. 17 die Befestigungskonsole der Fig. 16 im ausgezogenen Zustand,
Fig. 18 die Befestigungskonsole der Fig. 17 in einer perspektivischen Ansicht von schräg vorne,
Fig. 19 eine Befestigungskonsole gemäß einer vierten Ausführungsform der Erfindung,
Fig. 20 die Befestigungskonsole der Fig. 19 im ausgezogenen Zustand,
Fig. 21 einen Blechzuschnitt für ein Kanalbefestigungsteil mit Teleskopabschnitt für die Befestigungskonsole der Fig. 1,
Fig. 22 das aus dem Blechzuschnitt der Fig. 21 fertiggestellten Kanalbefestigungsteil mit Teleskopabschnitt,
Fig. 23 einen Blechzuschnitt für die Herstellung eines Wandbefestigungsteils für die Befestigungskonsole der Fig. 1,
Fig. 24 den Blechzuschnitt der Fig. 23 im teilweise abgebogenen Zustand und
Fig. 25 das fertiggestellte Wandbefestigungsteil der Befestigungskonsole der Fig. 1.

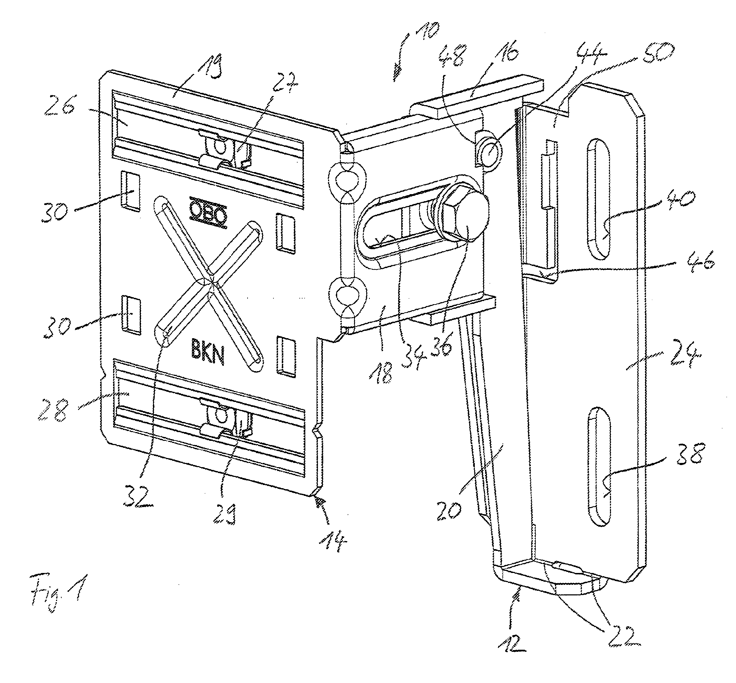

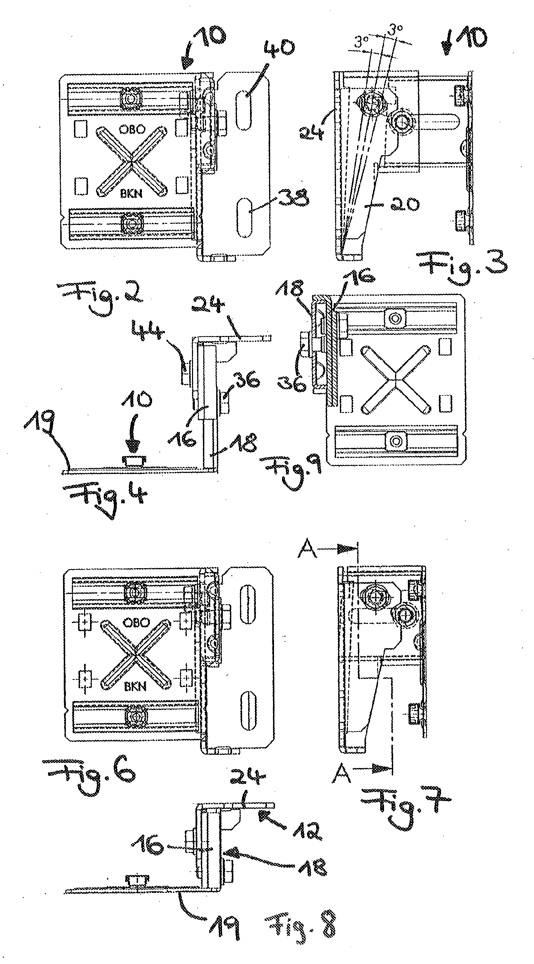

Die Darstellung der Fig. 1 zeigt eine erfindungsgemäße Befestigungskonsole 10 gemäß einer ersten Ausführungsform der Erfindung. Die Befestigungskonsole 10 weist ein Wandbefestigungsteil 12 und ein Kanalbefestigungsteil 14 auf. Das Kanalbefestigungsteil 14 und das Wandbefestigungsteil 12 weisen jeweils einen Teleskopabschnitt 18 bzw. 16 auf, die ineinander verschiebbar angeordnet sind. Dadurch kann eine Länge der Befestigungskonsole verändert werden. Der Teleskopabschnitt 16 des Wandbefestigungsteils 12 ist einstückig mit einem Winkelstück 20 ausgebildet, das über eine Sollbiegestelle 22 schwenkbar mit einer Wandbefestigungsplatte 24 verbunden ist. Ein Winkel des Teleskopabschnitts 16 relativ zum Wandbefestigungsplatte 24 kann dadurch eingestellt werden, wobei, wie in Fig. 3 zu erkennen ist, ein Schwenkwinkel von ± 3° vorgesehen ist. Ein solcher Schwenkwinkel reicht aus, um gegebenenfalls Abweichungen einer Gebäudewand von der Vertikalen ausgleichen zu können.

Das Kanalbefestigungsteil 14 weist neben dem Teleskopabschnitt 18 eine rechtwinklig zum Teleskopabschnitt 18 abgebogene Tragplatte 19 auf. Die Tragplatte 19 ist zur Befestigung eines Leitungsführungskanals vorgesehen und weist zwei horizontal verlaufende Ausnehmungen 26, 28 auf, in denen jeweils eine Befestigungsmutter 27, 29 horizontal verschoben werden kann, sowie insgesamt vier Rastöffnungen 30, in die beispielsweise eine Adapterplatte oder dergleichen eingehängt werden kann. Die Tragplatte 19 ist zentral mit einer kreuzförmigen Sicke 32 zur Versteifung versehen.

Der Teleskopabschnitt 18 ist in der Mitte seiner Basis mit einem Langloch 34 versehen, durch das sich eine Befestigungsschraube 36 hindurch erstreckt. Die Befestigungsschraube 36 ist gegenüberliegend der Basis des Teleskopelements 18 in eine Gewindebohrung in der Basis des Teleskopelements 16 des Wandbefestigungsteils 12 eingeschraubt. Durch Anziehen der Befestigungsschraube 36 kann das Teleskopelement 18 in Richtung auf das Teleskopelement 16 vorgespannt und dadurch arretiert werden.

Zur Montage der Befestigungskonsole 10 wird zunächst die Wandbefestigungsplatte 24 des Wandbefestigungsteils 12 an einer Gebäudewand befestigt und in der Höhe ausgerichtet. Hierfür ist die Wandbefestigungsplatte 24 mit zwei Langlöchern 38, 40 versehen. Nach Befestigung des Wandbefestigungsteils 12 wird das Teleskopelement 16 exakt horizontal ausgerichtet, wozu gegebenenfalls das Winkelstück 20 gegenüber der Wandbefestigurigsplatte 24 verschwenkt werden muss. Nachdem die horizontale Ausrichtung des Teleskopelements 16 erreicht ist, wird eine weitere Befestigungsschraube 44 angezogen, um den eingestellten Winkel zu arretieren. Nachfolgend kann das zweite Teleskopelement 18 so weit ausgezogen werden, wie der Leitungsführungskanal von der Gebäudewand entfernt angebracht werden soll. Nach Anziehen der Befestigungsschraube 36 zwischen den Teleskopelementen 16, 18 sind die Einzelteile der Befestigungskonsole 10 aneinander gesichert und der Leitungsführungskanal kann angebracht werden.

Die Darstellung der Fig. 2 zeigt die Befestigungskonsole 10 in einer Vorderansicht.

Die Ansicht der Fig. 3 zeigt die Befestigungskonsole 10 in einer Seitenansicht. Angedeutet ist die Verschwenkbarkeit des Winkelstücks 20 gegenüber der Wandbefestigungsplatte um ± 3°.

In Fig. 4, einer Draufsicht auf die Befestigungskonsole 10, ist die um 90° abgewinkelte Form der Befestigungskonsole 10 zu erkennen. Die Langlöcher 40 in der Wandbefestigungsplatte 24 als auch Rastöffnungen 30 und die Ausnehmungen 26, 28 in der Tragplatte 19 sind dadurch ohne Weiteres von vorne zugänglich, Die Befestigungskonsole 10 kann daher problemlos montiert werden.

In der Ansicht der Fig. 4 ist auch zu erkennen, dass die erste Befestigungsschraube 36 zum Verspannen der beiden Teleskopelemente 16, 18 relativ zu der zweiten Befestigungsschraube 44 zum Verspannen des Winkelstücks um 180° gedreht angeordnet ist. Die Befestigungsschrauben 36, 34 können dadurch unabhängig voneinander gelockert und angezogen werden und es steht genügend Platz für das Ansetzen eines Schraubenschlüssels zur Verfügung.

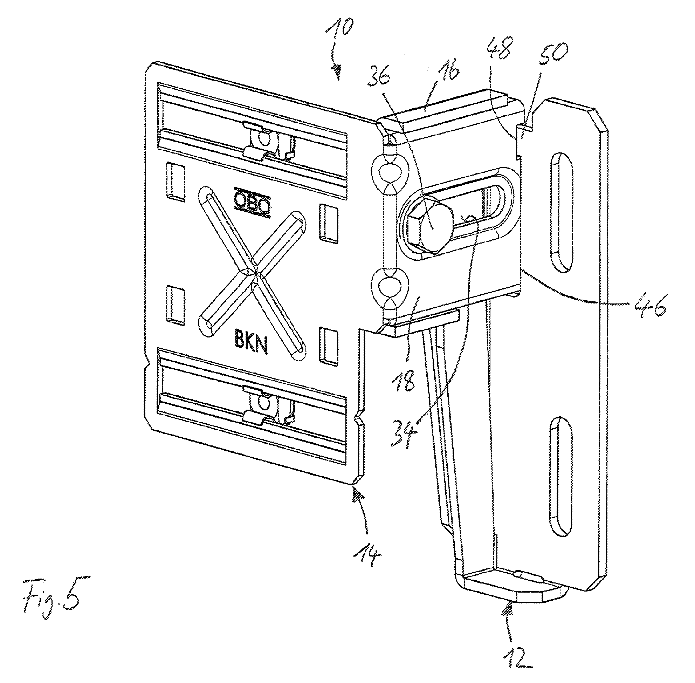

Die Darstellung der Fig. 5 zeigt die Befestigungskonsole der Fig. 1 in einem zusammengeschobenen Zustand, d.h. bei minimaler Länge des Auslegers, wohingegen in Fig. 1 die Befestigungskonsole mit maximaler Länge des Auslegers, der durch die Teleskopelemente 16, 18 gebildet ist, dargestellt ist.

Wie in Fig. 5 zu erkennen ist, ist das Kanalbefestigungsteil 14 so weit in Richtung auf das Wandbefestigungsteil 12 verschoben, dass ein Ende des Kanalbefestigungsteils in eine L-förmige Ausnehmung 46 der Wandbefestigungsplatte 24 eingreift. Die L-förmige Ausnehmung 46 der Wandbefestigungsplatte 24 ist in Fig. 1 zu erkennen. Das Teleskopelement 18 ist in einem oberen Bereich angrenzend an seinen in Fig. 5 oberen Schenkel mit einer Ausnehmung 48 versehen. In diese Ausnehmung 48 erstreckt sich ein Steg 50 der Wandbefestigungsplatte 24 hinein, wenn das Teleskopelement 18 so weit in Richtung auf die Wandbefestigungsplatte 24 verschoben ist, dass es in die L-förmige Ausnehmung 46 eingreift.

Wie anhand eines Vergleichs der Fig. 1 und 5 gut zu erkennen ist, befindet sich die erste Befestigungsschraube 36 im vollständig eingeschobenen Zustand der beiden Teleskopelemente 16, 18 an der linken Begrenzung des Langlochs 34, im vollständig ausgezogenen Zustand der Fig. 1 dahingegen an der rechten Begrenzung des Langlochs 34. Ersichtlich sind Zwischenstellungen ohne Weiteres möglich.

Die Darstellung der Fig. 6 zeigt eine Vorderansicht der Befestigungskonsole 10 der Fig. 5.

Fig. 7 zeigt eine Seitenansicht der Befestigungskonsole 10 der Fig. 5, wobei in Fig. 7 ein Schnittverlauf A-A eingezeichnet ist.

Fig. 8 zeigt eine Draufsicht auf die Befestigungskonsole 10 der Fig. 5. Ein Vergleich der Fig. 4 und 8 zeigt, wie das Teleskopelement 18 in das erste Teleskopelement 16 eingeschoben werden kann, um einen Abstand zwischen der Tragplatte 19 und der Wandbefestigungsplatte 24 zu verändern.

Die Darstellung der Fig. 9 zeigt eine Draufsicht auf den Schnittverlauf A-A aus Fig. 7. In dieser Darstellung ist zu erkennen, dass beide Teleskopelemente 16, 18 U-förmig ausgebildet sind und jeweils eine Basis und zwei von der Basis ausgehende Schenkel aufweisen. Die Basen der beiden Teleskopelemente 16, 18 sind dabei im Abstand voneinander angeordnet und die Schenkel des zweiten Teleskopelements 18 erstrecken sich in Richtung auf die Basis des ersten Teleskopelements 16 und liegen mit ihren Stirnflächen auf der Basis des ersten Teleskopelements 16. Die Schenkel der beiden Teleskopelemente 16, 18 und deren Basen sind parallel zueinander angeordnet. Die Schenkel des zweiten Teleskopelements 18 liegen mit ihren Außenseiten abschnittsweise an den Innenseiten der Schenkel des ersten Teleskopelements 16 an. Mit anderen Worten ist das zweite Teleskopelement 18 so bemessen, dass es in das erste Teleskopelement 16 eingeschoben werden kann. Das zweite Teleskopelement 18 ist dadurch im Wesentlichen spielfrei in dem ersten Teleskopelement 16 geführt. Mit der ersten Befestigungsschraube 36 können die beiden Teleskopelemente 16, 18 gegeneinander vorgespannt werden. Beim Anziehen der ersten Befestigungsschraube 36, die einerseits auf einer Rückseite der Basis des zweiten Teleskopelements 18 angreift und andererseits in einer Gewindebohrung der Basis des ersten Teleskopelements 16 verankert ist, werden die beiden Teleskopelemente 16, 18 gegeneinander verspannt.

Zum einen werden durch Anziehen der Befestigungsschraube 36 die Stirnseiten der Schenkel des zweiten Teleskopelements 18 gegen die Basis des ersten Teleskopelements 16 gedrückt.

Zum anderen wird das zweite Teleskopelement 18, bzw. dessen Basis, leicht verformt, so dass die Basis des zweiten Teleskopelements 18 leicht in Richtung auf die Basis des ersten Teleskopelements 16 zu gekrümmt wird. Wie zu erkennen ist, ist das zweite Teleskopelement 18 mit geringerer Wandstärke ausgeführt als das erste Teleskopelement 16. Beim Anziehen der Befestigungsschraube 36 wird sich somit hauptsächlich das zweite Teleskopelement 18 verformen. Durch diese leichte Krümmung der Basis des zweiten Teleskopelements 18 in Richtung auf das erste Teleskopelement 16 zu spreizen sich gleichzeitig die Schenkel des zweiten Teleskopelements 18 nach außen und werden dadurch gegen die Innenseiten der Schenkel des ersten Teleskopelements 16 gedrückt. Durch Anziehen der Befestigungsschraube 36 kann dadurch ein sehr sicherer Halt des zweiten Teleskopelements 18 an dem ersten Teleskopelement 16 erreicht werden, wobei dieser Halt gleichzeitig durch Reibschluss und Formschluss bewirkt ist.

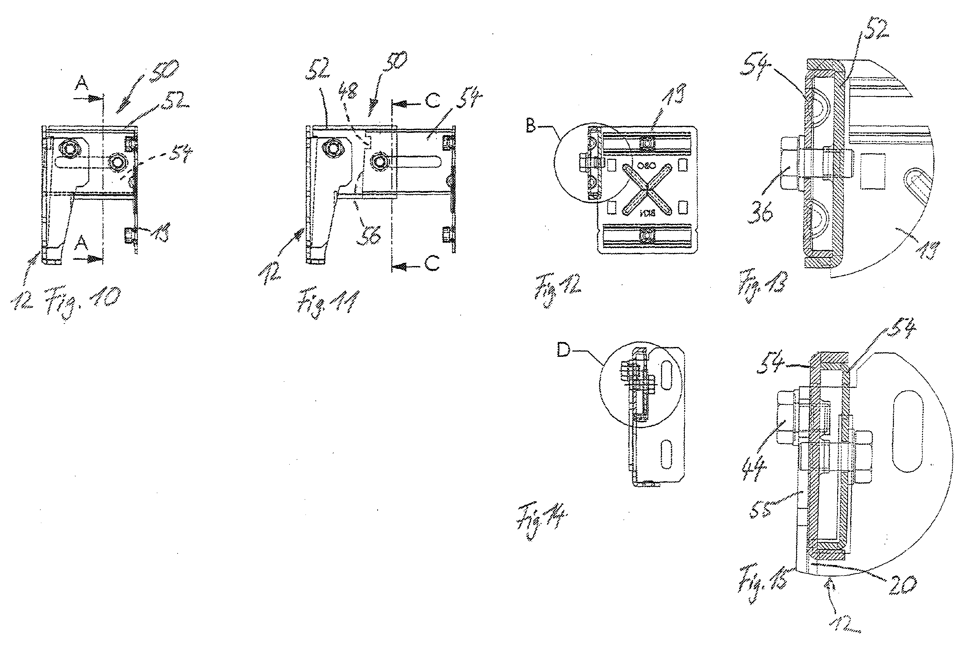

Die Darstellung der Fig. 10 zeigt eine Seitenansicht einer Befestigungskonsole 50 gemäß einer zweiten Ausführungsform der Erfindung. Die Befestigungskonsole 50 der Fig. 10 unterscheidet sich von der Befestigungskonsole 10 der Fig. 1 bis 9 lediglich durch die Länge der beiden Teleskopelemente 52, 54. Im Übrigen sind die Befestigungskonsolen 10 und 50 baugleich, so dass auch identische Bestandteile nicht erneut beschrieben werden.

Die Darstellung der Fig. 11 zeigt die Befestigungskonsole 50 der Fig. 10 im vollständig ausgezogenen Zustand. Zu erkennen ist in dieser Darstellung die leicht abgeschrägte Ausbildung der dem Wandbefestigungsteil 12 zugewandten Kante des zweiten Teleskopelements 54, wobei diese Kante 56 in der Ansicht der Fig. 11 an und für sich verdeckt ist und daher mit gestrichelten Linien angedeutet ist. Ein unterer Abschnitt dieser dem Wandbefestigungsteil 12 zugewandten Kante 56 ragt weiter in Richtung auf das Wandbefestigungsteil 12 vor als der obere Abschnitt dieser Kante 56. Im oberen Bereich dieser Kante ist zusätzlich noch die Ausnehmung 48 angeordnet, die bereits anhand der Befestigungskonsole 10 in Fig. 5 erläutert wurde. Die Kante 56 kann sich, wie anhand der Darstellung der Fig. 5 und der Fig. 1 erläutert wurde, in eine L-förmige Ausnehmung in der Wandbefestigungsplatte des Wandbefestigungsteils 12 hinein erstrecken, wenn das zweite Teleskopelement 54 vollständig in das erste Teleskopelement 52 eingeschoben ist und somit der geringstmögliche Abstand zwischen der Tragplatte 19 und der Wandbefestigungsplatte des Wandbefestigungsteils 12 eingestellt ist. Dieser Zustand ist in Fig. 10 dargestellt.

Die Darstellung der Fig. 12 zeigt eine Draufsicht auf die Schnittebene A.A aus Fig. 10.

Fig. 13 zeigt die vergrößerte Einzelheit B aus Fig. 12. Zu erkennen ist, dass die beiden Teleskopelemente 52, 54 mit ihren offenen Seiten aufeinander zu ineinander eingesetzt sind und dadurch in ihrem Überlappungsbereich ein Hohlprofil bilden. Wie bereits erörtert wurde, ist das zweite Teleskopelement 54 einschließlich der Tragplatte 19 aus Blech mit einer geringeren Wandstärke als das erste Teleskopelement 52 und insgesamt das Wandbefestigungsteil 12 hergestellt. Dadurch wird sich, wie bereits erörtert wurde, beim Anziehen der Befestigungsschraube 36 das zweite Teleskopelement 54 geringfügig verformen und in dem ersten Teleskopelement 52 verspannen.

Die Darstellung der Fig. 14 zeigt eine Draufsicht auf die Schnittebene C-C in Fig. 11.

Fig. 15 zeigt die vergrößerte Einzelheit D aus Fig. 14. Neben den beiden ineinander eingesetzten Teleskopelementen 52, 54 ist in Fig. 15 zu erkennen, dass das schwenkbare Winkelstück 20 und ein abgewinkelter Abschnitt 55 des Wandbefestigungsteils 12 flächig aneinander anliegen und mittels der zweiten Befestigungsschraube 44 gegeneinander verspannt werden können, um die eingestellte Winkellage zu sichern.

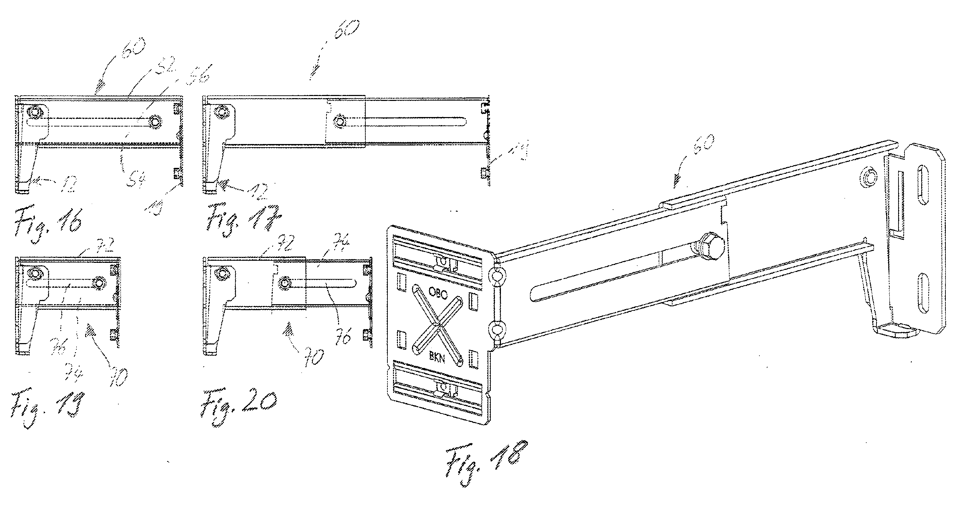

Die Darstellung der Fig. 16 zeigt in einer Seitenansicht eine Befestigungskonsole 60 gemäß einer dritten Ausführungsform der Erfindung. Die Befestigungskonsole 60 unterscheidet sich von den bereits beschriebenen erfindungsgemäßen Befestigungskonsolen 10, 50 lediglich bezüglich der Länge ihrer Teleskopelemente 52, 54. Zusammen mit den Teleskopelementen 52, 54 wird auch ein Langloch 56 in dem jeweils zweiten Teleskopelement 54 verlängert, so dass der vollständige Verstellbereich genutzt werden kann. Fig. 16 zeigt die Befestigungskonsole 60 im vollständig eingeschobenen Zustand, also bei minimalem Abstand zwischen Tragplatte 19 und Wandbefestigungsteil 12.

Fig. 17 zeigt die Befestigungskonsole 60 im vollständig ausgezogenen Zustand, also bei einem maximalen Abstand zwischen Tragplatte 19 und Wandbefestigungsteil 12.

In Fig. 18 ist die Befestigungskonsole 60 der Fig. 17 in einer perspektivischen Ansicht dargestellt, wobei in Fig. 18 der vollständig ausgezogene Zustand der Fig. 17 dargestellt ist.

Die Ansicht der Fig. 19 zeigt eine Befestigungskonsole 70 gemäß einer vierten bevorzugten Ausführungsform der Erfindung. Die Befestigungskonsole 70, die in Fig. 19 im vollständig eingeschobenen und in Fig. 20 im vollständig ausgezogenen Zustand dargestellt ist, unterscheidet sich von den bereits beschriebenen Befestigungskonsolen 10, 50, 60 lediglich durch die Länge der beiden Teleskopelemente 72, 74 und die Länge des Langlochs 76 in dem zweiten Teleskopelement 74.

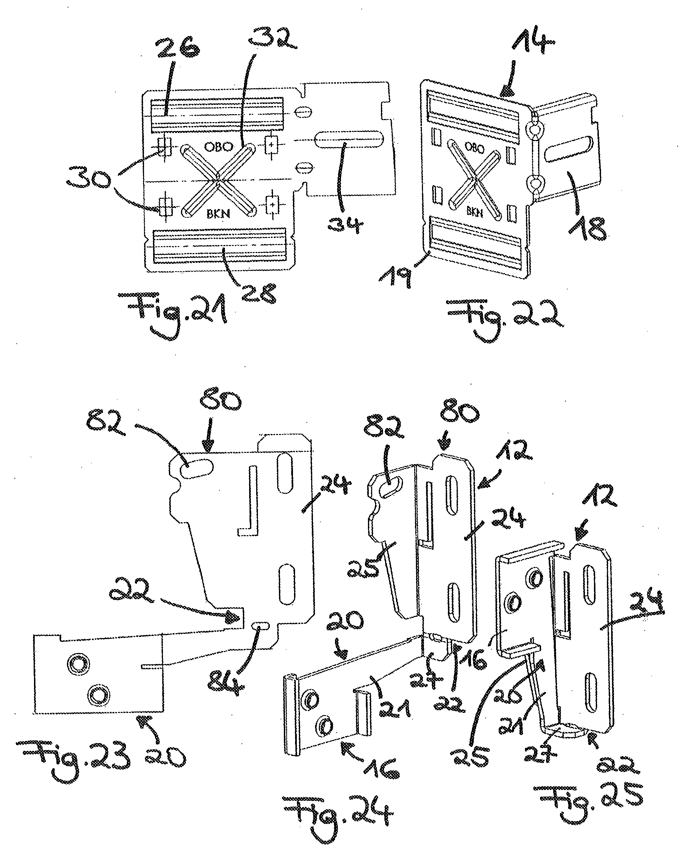

Die Darstellung der Fig. 21 zeigt einen Blechzuschnitt für das Kanalbefestigungsteil 14 der Befestigungskonsole 10 der Fig. 1, wobei dieser Blechzuschnitt bereits mit dem Langloch 34, den Ausnehmungen 30 zum Einhängen einer Adapterplatte sowie weiter den horizontal verlaufenden Ausnehmungen 26, 28 versehen ist. Weiter ist die Kreuzsicke 32 bereits eingeprägt und die Berandungen der Ausnehmungen 26, 28 sind ebenfalls bereits ausgeprägt. Diese Berandungen dienen dann als Führungsschienen für horizontal verschiebbare Befestigungsmuttern 27, 29, siehe Fig. 1.

Fig. 22 zeigt das ausgehend vom Blechzuschnitt der Fig. 21 dann fertiggestellte Kanalbefestigungsteil 14 mit dem dann eine U-Form aufweisenden und gegenüber der Tragplatte 19 um 90° abgebogenen zweiten Teleskopelement 18.

Die Darstellung der Fig. 23 zeigt einen Blechzuschnitt 80 für das Wandbefestigungsteil 12 der Befestigungskonsole 10 der Fig. 1. Ein bogenförmiges Langloch 82 ist dazu vorgesehen, den Schaft der zweiten Befestigungsschraube 44, siehe Fig. 4, aufzunehmen und die Winkelverstellbarkeit des Winkelstücks 20 zu ermöglichen. Die Sollbiegestelle 22 ist durch Vorsehen eines Langlochs 84 ausgebildet, das mittig in der Verbindung zwischen der Wandbefestigungsplatte 24 und dem Winkelstück 20 angeordnet ist. Rechts und links des Langlochs 84 bleiben damit lediglich noch zwei schmale Materialstreifen stehen, die dann die Sollbiegestelle ausbilden.

Fig. 24 zeigt den Blechzuschnitt 80 in einem Zustand, in dem bereits das Winkelstück 20 fertig ausgebildet und das erste Teleskopelement 16 seine endgültige Form erhalten hat. Auch die beiden Gewindebohrungen für die Befestigungsschrauben 36, 44 sind in der Basis des ersten Teleskopelements 16 bereits ausgebildet. Das Winkelstück 20 weist einen ersten Abschnitt 27 auf, der sich an die Sollbiegestelle 22 anschließt und parallel zu einer mittels der Sollbiegestelle 22 definierten Schwenkachse angeordnet ist. Senkrecht zum ersten Abschnitt 27 abgebogen ist ein zweiter Abschnitt 21, der in einer Ebene mit der Basis des ersten Teleskopelements 16 liegt. Der an einer Gebäudewand zu befestigende Abschnitt des Wandbefestigungsteils 12 ist ebenfalls bereits fertiggestellt und weist als dritten Abschnitt die Wandbefestigungsplatte 24 und den vierten abgewinkelten Abschnitt 25 auf, der rechtwinklig zur Wandbefestigungsplatte 24 angeordnet ist, das Langloch 82 aufweist und dann parallel zu dem zweiten Abschnitt 21 des Winkelstücks 20 angeordnet ist.

Fig. 25 zeigt dann das fertiggestellte Wandbefestigungsteil 12. Zu erkennen ist, dass das erste Teleskopelement 16 gemeinsam mit dem Winkelstück 20 nun relativ zu der Wandbefestigungsplatte 24 und dem Abschnitt 25 verschwenkt werden kann, wobei beim Verschwenken lediglich die Sollbiegestelle 22 auf Biegung beansprucht wird. Winkelstück 20 und Wandbefestigungsplatte 24 sind dadurch einstückig und somit unverlierbar miteinander verbunden, dennoch kann das Winkelstück 20 relativ zur Wandbefestigungsplatte 24 verschwenkt werden, um eventuelle Abweichungen einer Gebäudewand von der Vertikalen ausgleichen zu können.

Wie zu erkennen ist, liegen der zweite Abschnitt 21 und die Basis des ersten Teteskopelements 16 abschnittsweise flächig an dem vierten Abschnitt 25 des Wandbefestigungsteils 12 an, speziell an der Innenseite des vierten Abschnitts 25, die der Wandbefestigungsplatte 24 zugewandt ist. Mittels der zweiten Befestigungsschraube 44, siehe Fig. 4, werden der vierte Abschnitt 25 und der zweite Abschnitt 21 dann gegeneinander verspannt, um die zwischen Wandbefestigungsplatte 24 und erstem Teleskopelement 16 eingestellte Winkellage zu arretieren.

## Patentansprüche

1. Verstellbare Befestigungskonsole für Leitungsführungskanäle mit einem Wandbefestigungsteil und einem Kanalbefestigungsteil, sowie mit wenigstens einem ersten und einem zweiten Teleskopelement (16, 18; 52, 54; 72, 74), wobei die Teleskopelemente (16, 18; 52, 54; 72, 74) verschiebbar zueinander angeordnet sind, wobei die Teleskopelemente (16, 18; 52, 54; 72, 74) im Querschnitt jeweils u-förmig mit einer Basis und zwei von der Basis ausgehenden Schenkeln ausgebildet und relativ zueinander verschiebbar angeordnet sind, **dadurch gekennzeichnete, dass** sich die Schenkel des zweiten Teleskopelements (18; 54; 74) in Richtung auf die Basis des ersten Teleskopelements (16; 52; 72) erstrecken und die beiden Teleskopelemente (16, 18; 52, 54; 72, 74) wenigstens abschnittsweise ein Hohlprofil bilden, wobei wenigstens eine Befestigungsschraube (36) vorgesehen ist, um die Basis des zweiten Teleskopelements (18; 54; 74) in Richtung auf die Basis des ersten Teleskopelements (16; 52; 72) vorzuspannen.

2. Verstellbare Befestigungskonsole nach Anspruch 1, **dadurch gekennzeichnet, dass** ein Abstand zwischen den einander zugewandten Innenflächen der Schenkel des ersten Teleskopelements (16; 52; 72) im Wesentlichen dem Abstand zwischen den voneinander abgewandten Außenflächen der Schenkel des zweiten Teleskopelements (18; 54; 74) entspricht.

3. Verstellbare Befestigungskonsole nach einem der vorstehenden Ansprüche, **dadurch gekennzeichnet, dass** die Stirnflächen an den freien Enden der Schenkel des zweiten Teleskopelements (18; 54; 74) auf der Basis des ersten Teleskopelements (16; 52; 72) aufliegen.

4. Verstellbare Befestigungskonsole nach einem der vorstehenden Ansprüche, **dadurch gekennzeichnet, dass** das zweite Teleskopelement (18; 54; 74) wenigstens im Bereich der Basis eine geringere Wandstärke aufweist als das erste Teleskopelement (16; 52; 72).

5. Verstellbare Befestigungskonsole nach einem der vorstehenden Ansprüche, **dadurch gekennzeichnet, dass** das Wandbefestigungsteil (12) und das Kanalbefestigungsteil (14) mittels der beiden Teleskopelemente (16, 18; 52, 54; 72, 74) miteinander verbunden sind, wobei das Wandbefestigungsteil (12), die Teleskopelemente und/oder das Kanalbefestigungsteil ein verschwenkbares Winkelstück (20) aufweist und wobei das Winkelstück (20) einstückig mit dem Wandbefestigungsteil (12), den Teleskopelementen beziehungsweise dem Kanalbefestigungsteil ausgebildet und mittels einer Sollbiegestelle (22) schwenkbar angebunden ist.

6. Verstellbare Befestigungskonsole nach Anspruch 5, **dadurch gekennzeichnet, dass** das verschwenkbare Winkelstück (20) wenigstens einen ersten und einen zweiten Abschnitt (27, 21) aufweist, die senkrecht zueinander angeordnet sind, wobei der an die Sollbiegestelle (22) angrenzende erste Abschnitt (27) parallel zu einer mittels der Sollbiegestelle (22) definierten Schwenkachse und der zweite Abschnitt (21) senkrecht zur Schwenkachse angeordnet ist.

7. Verstellbare Befestigungskonsole nach Anspruch 5 oder 6, **dadurch gekennzeichnet, dass** das Wandbefestigungsteil (12), die Teleskopelemente und/oder das Kanalbefestigungsteil wenigstens einen dritten und einen vierten Abschnitt (24, 25) aufweist, die senkrecht zueinander angeordnet sind, wobei der an die Sollbiegestelle (22) angrenzende dritte Abschnitt (24) parallel zu einer mittels der Sollbiegestelle (22) definierten Schwenkachse und der vierte Abschnitt (25) senkrecht zur Schwenkachse angeordnet ist.

8. Verstellbare Befestigungskonsole nach Anspruch 6 und 7, **dadurch gekennzeichnet, dass** der zweite Abschnitt (21) des Winkelstücks (20) und der vierte Abschnitt (25) des Wandbefestigungsteils parallel zueinander angeordnet sind.

9. Verstellbare Befestigungskonsole nach Anspruch 8, **dadurch gekennzeichnet, dass** der zweite Abschnitt (21) des Winkelstücks (20) und der vierte Abschnitt (25) wenigstens abschnittsweise aneinander antiegen.

10. Verstellbare Befestigungskonsole nach Anspruch 8 oder 9, **dadurch gekennzeichnet, dass** der zweite Abschnitt (21) des Winkelstücks (20) und die Basis des ersten Teleskopelements (16) in einer Ebene liegen, wobei die Basis des ersten Teleskopelements (16) und der vierte Abschnitt (25) wenigstens abschnittsweise aneinander liegen.

11. Verstellbare Befestigungskonsole nach einem der vorstehenden Ansprüche, **dadurch gekennzeichnet, dass** das Wandbefestigungsteil (12), die Teleskopelemente (16, 18; 52, 54; 72, 74) und/oder das Kanalbefestigungsteil (14) als Blechbiegeteile ausgebildet sind.

## Claims

1. An adjustable fixing console for cable guidance channels comprising a wall fixing component and a channel fixing component, and at least one first and one second telescope element (16, 18; 52, 54; 72, 74), the telescope elements (16, 18; 52, 54; 72, 74) being arranged to be movable relative to another, each of the telescope elements (16, 18; 52, 54; 72, 74) being u-shaped in cross section including a base and two legs extending from said base and arranged to be movable relative to another, **characterized in that** the legs of the second telescope element (18; 54; 74) extend towards the base of the first telescope element (16; 52; 72), and both the telescope elements (16, 18; 52, 54; 72, 74) form a hollow profile at least sectionally, at least one attachment screw (36) being provided to bias the base of the second telescope element (18; 54; 74) towards the base of the first telescope element (16; 52; 72).

2. The adjustable fixing console according to claim 1, **characterized in that** a distance between the facing interior surfaces of the legs of the first telescope element (16; 52; 72) corresponds essentially to the distance between the averted exterior surfaces of the legs of the second telescope element (18; 54; 74).

3. The adjustable fixing console according to any of the preceding claims, **characterized in that** the front faces on the free ends of the legs of the second telescope element (18; 54; 74) abut on the base of the first telescope element (16; 52; 72).

4. The adjustable fixing console according to any of the preceding claims, **characterized in that** the second telescope element (18; 54; 74) has a smaller wall thickness than the first telescope element (16; 52; 72) at least in the vicinity of the base.

5. The adjustable fixing console according to any of the preceding claims, **characterized in that** the wall fixing component (12) and the channel fixing component (14) are interconnected by means of the two telescope elements (16, 18; 52, 54; 72, 74), with the wall fixing component (12), the telescope elements and/or the channel fixing component including a pivotable angular piece (20), and the angular piece (20) being integral to the wall fixing component (12), the telescope elements and the channel fixing component, respectively, and pivotably fastened by means of a predetermined bending position (22).

6. The adjustable fixing console according to claim 5, **characterized in that** the pivotable angular piece (20) has at least one first and one second section (27, 21) disposed perpendicular to another, with the first section (27) adjacent to the predetermined bending position (22) being parallel to a pivot axis defined by means of the predetermined bending position (22), and the second section (21) being perpendicular to the pivot axis.

7. The adjustable fixing console according to claim 5 or 6, **characterized in that** the wall fixing component (12), the telescope elements and/or the channel fixing component include at least one third and one fourth section (24, 25) disposed perpendicular to another, with the third section (24) adjacent to the predetermined bending position (22) being parallel to a pivot axis defined by means of the predetermined bending position (22), and the fourth section (25) being perpendicular to the pivot axis.

8. The adjustable fixing console according to claim 6 and 7, **characterized in that** the second section (21) of the angular piece (20) and the fourth section (25) of the wall fixing component being disposed parallel to another.

9. The adjustable fixing console according to claim 8, **characterized in that** the second section (21) of the angular piece (20) and the fourth section (25) are abutting at least sectionally.

10. The adjustable fixing console according to claim 8 or 9, **characterized in that** the second section (21) of the angular piece (20) and the base of the first telescope element (16) are located in one plane, with the base of the first telescope element (16) and the fourth section (25) abutting at least sectionally.

11. The adjustable fixing console according to any of the preceding claims, **characterized in that** the wall fixing component (12), the telescope elements (16, 18; 52, 54; 72, 74) and/or the channel fixing component (14) are sheet metal bent parts.

## Revendications

1. Console de fixation ajustable pour goulottes de câbles, présentant une partie de fixation à la paroi et une partie de fixation à la goulotte ainsi qu'au moins un premier et un deuxième élément télescopique (16, 18; 52, 54; 72, 74),
les éléments télescopiques (16, 18; 52, 54; 72, 74) étant disposés de manière à pouvoir coulisser l'un par rapport à l'autre,
les éléments télescopiques (16, 18; 52, 54; 72, 74) présentant tous deux une section transversale en forme de U dotée d'une base et de deux ailes qui partent de la base et étant disposés de manière à pouvoir coulisser l'un par rapport à l'autre, **caractérisée en ce que**
les ailes du deuxième élément télescopique (18; 54; 74) s'étendent en direction de la base du premier élément télescopique (16; 52; 72) et au moins certaines parties des deux éléments télescopiques (16, 18; 52, 54; 72, 74) forment un profilé creux et
**en ce qu'**au moins une vis de fixation (36) est prévue pour précontraindre la base du deuxième élément télescopique (18; 54; 74) en direction de la base du premier élément télescopique (16; 52; 72).

2. Console de fixation ajustable selon la revendication 1, **caractérisée en ce que** la distance entre les surfaces intérieures tournées l'une vers l'autre des ailes du premier élément télescopique (16; 52; 72) correspond essentiellement à la distance entre les surfaces extérieures non tournées l'une vers l'autre des ailes du deuxième élément télescopique (18; 54; 74).

3. Console de fixation ajustable selon l'une des revendications précédentes, **caractérisée en ce que** les surfaces frontales des deux extrémités libres des ailes du deuxième élément télescopique (18; 54; 74) reposent sur la base du premier élément télescopique (16; 52; 72).

4. Console de fixation ajustable selon l'une des revendications précédentes, **caractérisée en ce qu'**au moins au niveau de sa base, le deuxième élément
télescopique (18; 54; 74) présente une paroi d'épaisseur moins épaisse que le premier élément télescopique (16; 52; 72).

5. Console de fixation ajustable selon l'une des revendications précédentes, **caractérisée en ce que** la partie (12) de fixation à la paroi et la partie (14) de fixation à la goulotte sont reliées l'une à l'autre au moyen de deux éléments télescopiques (16, 18; 52, 54; 72, 74), **en ce que** la partie (12) de fixation à la paroi, les éléments télescopiques et/ou la partie de fixation à la goulotte présentent une pièce coudée pivotante (20), la pièce coudée (20) étant formée d'un seul tenant avec la partie (12) de fixation à la paroi, les éléments télescopiques ou la partie de fixation à la goulotte et étant reliée à pivotement au moyen d'un emplacement fléchissant (22).

6. Console de fixation ajustable selon la revendication 5, **caractérisée en ce que** la pièce coudée pivotante (20) présente au moins une première et une deuxième section (27, 21) disposées perpendiculairement l'une à l'autre, la première section (27) adjacente à l'emplacement fléchissant (22) étant disposée parallèlement à un axe de pivotement défini au moyen de l'emplacement fléchissant (22) et la deuxième section (21) étant disposée perpendiculairement à l'axe de pivotement.

7. Console de fixation ajustable selon les revendications 5 ou 6, **caractérisée en ce que** la partie (12) de fixation à la paroi, les éléments télescopiques et/ou la partie de fixation à la goulotte présentent au moins une troisième et une quatrième section (24, 25) disposées perpendiculairement l'une à l'autre, la troisième section (24) adjacente à l'emplacement fléchissant (22) étant disposée parallèlement à un axe de pivotement défini au moyen de l'emplacement fléchissant (22) et la quatrième section (25) étant disposée perpendiculairement à l'axe de pivotement.

8. Console de fixation ajustable selon les revendications 6 et 7, **caractérisée en ce que** la deuxième section (21) de la pièce coudée (20) et la quatrième section (25) de la partie de fixation à la paroi sont disposées parallèlement l'une à l'autre.

9. Console de fixation ajustable selon la revendication 8, **caractérisée en ce qu'**au moins certaines parties de la deuxième section (21) de la pièce coudée (20) et de la quatrième section (25) reposent l'une contre l'autre.

10. Console de fixation ajustable selon les revendications 8 ou 9, **caractérisée en ce que** la deuxième section (21) de la pièce coudée (20) et la base du premier élément télescopique (16) sont situées dans un même plan, au moins certaines parties de la base du premier élément télescopique (16) et de la quatrième section (25) reposant l'une contre l'autre.

11. Console de fixation ajustable selon l'une des revendications précédentes, **caractérisée en ce que** la partie (12) de fixation à la paroi, les éléments télescopiques (16, 18; 52, 54; 72, 74) et/ou la partie (14) de fixation à la goulotte sont formées de pièces pliées en tôle.
